(19) **Europäisches Patentamt**
**European Patent Office**
**Office européen des brevets**

(11) **EP 4 769 055 A1**

(12) **EUROPEAN PATENT APPLICATION**
published in accordance with Art. 153(4) EPC

(43) Date of publication:
**01.07.2026 Bulletin 2026/27**

(21) Application number: **24870598.0**

(22) Date of filing: **20.09.2024**

(51) International Patent Classification (IPC):
***G05D 23/20*** *(2006.01)*

(52) Cooperative Patent Classification (CPC):
**G06F 1/206**

(86) International application number:
**PCT/CN2024/119964**

(87) International publication number:
**WO 2025/067054 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023 CN 202311250217**

(71) Applicant: **HUAWEI TECHNOLOGIES CO., LTD.
Shenzhen 518129 (CN)**

(72) Inventors:
• **PENG, Yu**
 **Shenzhen, Guangdong 518129 (CN)**
• **SHI, Peitao**
 **Shenzhen, Guangdong 518129 (CN)**
• **SUN, Suibin**
 **Shenzhen, Guangdong 518129 (CN)**
• **WEI, Wei**
 **Shenzhen, Guangdong 518129 (CN)**
• **ZHANG, Zipeng**
 **Shenzhen, Guangdong 518129 (CN)**

(74) Representative: **Gill Jennings & Every LLP
The Broadgate Tower
20 Primrose Street
London EC2A 2ES (GB)**

(54) **ELECTRIC DEVICE, ELECTRIC DEVICE SURFACE TEMPERATURE CONTROL METHOD, ELECTRIC DEVICE SURFACE TEMPERATURE CONTROL APPARATUS, MEDIUM, AND CHIP SYSTEM**

(57) A method for controlling a surface temperature of a power-consuming device, an apparatus for controlling a surface temperature of a power-consuming device, a power-consuming device, a computer-readable storage medium, and a chip system are provided. The method includes: obtaining a historical temperature that is of at least one heat emitting part located inside and/or outside the power-consuming device and that is between a first moment and a second moment (S210); using the historical temperature as an input of a temperature prediction model, and outputting a predicted temperature of an external surface of the power-consuming device at a third moment after the first moment and the second moment, where the temperature prediction model represents a relationship between the historical temperature and the predicted temperature (S220); and adjusting a working status of the power-consuming device based on the predicted temperature, to control the external surface temperature of the power-consuming device (S230). In this way, a lag between temperature measurement and temperature control can be overcome, and a measure can be taken as early as possible based on a temperature prediction result of the prediction model to perform temperature control, thereby improving a capability of controlling an external temperature of the power-consuming device, and improving user experience.

FIG. 1

## Description

This application claims priority to Chinese Patent Application No. 202311250217.3, filed with the China National Intellectual Property Administration on September 25, 2023, and entitled "POWER-CONSUMING DEVICE, METHOD AND APPARATUS FOR CONTROLLING SURFACE TEMPERATURE OF POWER-CONSUMING DEVICE, MEDIUM, AND CHIP SYSTEM", which is incorporated herein by reference in its entirety.

## TECHNICAL FIELD

This application relates to the field of device control technologies, and in particular, to a method for controlling a surface temperature of a power-consuming device, an apparatus for controlling a surface temperature of a power-consuming device, a power-consuming device, a computer-readable storage medium, and a chip system.

## BACKGROUND

There are temperature control technologies for power-consuming devices in the art. In these conventional technologies, resource consumption of an internal component of a power-consuming device is usually controlled based on power consumption of the internal component, to ensure that the internal component does not overheat. However, a fact that an excessively high external surface temperature adversely affects user experience is ignored. Some conventional technologies can control an external surface temperature, which is still implemented by controlling a working status of the internal component, but fail to recognize that it takes a specific amount of time to conduct a temperature or working energy consumption of the internal component to an external surface. This results in a lag in external surface temperature control. Therefore, there is an urgent need in the art for a temperature control technology that can control an external surface temperature of a power-consuming device in time, overcome a lag between temperature measurement and temperature control, and significantly improve user experience.

## SUMMARY

To this end, this application is dedicated to providing a method for controlling a surface temperature of a power-consuming device, an apparatus for controlling a surface temperature of a power-consuming device, a power-consuming device, a computer-readable storage medium, and a chip system that can control a surface temperature of the power-consuming device in time, overcome a lag between temperature measurement and temperature control, and significantly improve user experience.

According to an aspect, this application provides a method for controlling a surface temperature of a power-consuming device, including: first, obtaining a historical temperature that is of at least one heat emitting part located inside and/or outside the power-consuming device and that is between a first moment and a second moment; second, using the historical temperature as an input of a temperature prediction model, and outputting a predicted temperature of an external surface of the power-consuming device at a third moment after the first moment and the second moment, where the temperature prediction model represents a relationship between the historical temperature and the predicted temperature; and finally, adjusting a working status of the power-consuming device based on the predicted temperature, to control the external surface temperature of the power-consuming device.

According to this aspect, a technical means of performing prediction by using the temperature prediction model is used to overcome a lag between internal temperature measurement and surface temperature control, so that the working status of the power-consuming device can be controlled before the surface temperature actually rises, thereby smoothing a sharp fluctuation of the surface temperature, keeping the surface temperature as stable as possible, significantly improving user experience, and resolving a problem of an excessively high surface temperature.

In addition, temperature prediction is performed based on the temperature prediction model, thereby facilitating implementation of a correspondence between the historical temperature and the predicted temperature by using a mature artificial intelligence technical means such as machine learning in the art, thereby improving timeliness and accuracy of temperature prediction, facilitating improving timeliness and accuracy of temperature control, and avoiding an improper temperature fluctuation caused by an incorrect control approach due to incorrect prediction.

In a special embodiment of this application, to adjust the working status of the power-consuming device based on the predicted temperature, first, an amount of heat emitted by each of the at least one heat emitting part may be determined based on a working status and a heat capacity model of each heat emitting part, where the heat capacity model represents a mapping relationship between the working status of the heat emitting part and the amount of heat emitted by the heat emitting part. Then, a resource restriction proportion of each heat emitting part is determined based on the predicted temperature and the amount of heat emitted by each heat emitting part, where the resource restriction proportion indicates a reduction proportion of one or more of power consumption, a voltage, a frequency, and a load of the heat emitting part. Finally, the working status of each heat emitting part is controlled based on the resource restriction proportion.

Based on this embodiment, an amount of heat emitted by a heat emitting component is determined by using a heat capacity model, rather than by directly measuring a working temperature of the heat emitting component. This is because some heat emitting components are installed in very close proximity, and the directly measured temperature is affected by a surrounding environment and cannot accurately reflect an actual temperature of a single heat emitting component. Therefore, a temperature calculated by using the heat capacity model is more conducive to determining the actual temperature of the single heat emitting component, especially actual temperatures of a plurality of heat emitting components installed in close proximity.

In addition, the power-consuming device is controlled by setting the resource restriction proportion, so that a control policy can be flexibly adjusted, thereby implementing variability and flexibility of a control approach and a control magnitude, and avoiding inadaptation and inaccuracy that may be caused by directly controlling a component temperature simply based on the predicted temperature.

In a special embodiment of this application, the at least one heat emitting part includes a first heat emitting part, the first heat emitting part includes a plurality of heat emitting sub-parts, and the method further includes: first, allocating a resource restriction proportion of the first heat emitting part to the plurality of heat emitting sub-parts with a goal of maximizing performance of the first heat emitting part, to determine a resource restriction proportion of each of the plurality of heat emitting sub-parts; and then, controlling a working status of each heat emitting sub-part based on the resource restriction proportion of each heat emitting sub-part.

Based on this embodiment, a resource restriction proportion is re-allocated to a special heat emitting component having a plurality of sub-components, so that accuracy of temperature control performed based on the resource restriction proportion can be increased. For a performance characteristic of the special heat emitting component, a working status of the component is finely controlled, thereby implementing effective and quick temperature control.

In addition, the resource restriction proportion is allocated with the goal of maximizing the performance of the first heat emitting part, thereby facilitating preventing excessive resource restriction from affecting working performance of the heat emitting part. While the working status is controlled based on the resource restriction proportion, it is ensured as much as possible that the heat emitting part can still work normally and perform stably, thereby implementing harmless temperature control, reducing adverse impact caused by temperature control, and improving overall user experience and performance of the power-consuming device.

In a special embodiment of this application, to allocate the resource restriction of the first heat emitting part to the plurality of heat emitting sub-parts, the resource restriction proportion of each heat emitting sub-part may be determined based on the resource restriction proportion of the first heat emitting part and a mapping table, where the mapping table records a plurality of resource restriction proportions corresponding to the first heat emitting part, and resource restriction proportions that are of the plurality of heat emitting sub-parts and that correspond to each of the plurality of resource restriction proportions.

Based on this embodiment, a resource restriction proportion of a sub-component is determined by using the mapping table, so that a calculation speed of the resource restriction proportion of the sub-component can be increased. A corresponding resource restriction proportion value is obtained simply and quickly through table lookup, thereby avoiding a redundant calculation process, increasing a response speed of temperature control, and improving a temperature control effect.

In a special embodiment of this application, to determine the resource restriction proportion of each heat emitting part based on the predicted temperature and the amount of heat emitted by each heat emitting part, first, a resource restriction proportion of the power-consuming device may be determined based on the predicted temperature; and then, the resource restriction proportion of the power-consuming device is allocated to the plurality of heat emitting parts based on the amount of heat emitted by each heat emitting part, to obtain the resource restriction proportion of each heat emitting part.

Based on this embodiment, in addition, the resource restriction proportion of the entire power-consuming device is proportionally allocated to each heat emitting component based on an amount of heat emitted by each heat emitting component, so that each heat emitting component can use a temperature control policy with different magnitudes based on a heat emitting status of the heat emitting component, thereby facilitating refined and accurate temperature control, and effectively improving an actual effect of temperature control.

In a special embodiment of this application, the working status includes one or more of power consumption, a voltage, a frequency, and a load.

Based on this embodiment, the power consumption, the voltage, the frequency, and the load are working statuses or working indicators that can directly affect a temperature of a heat emitting part. Adjusting and controlling the indicators help control a temperature and an amount of heat of the heat emitting part by using a most direct approach, thereby quickly reducing an external or surface temperature in time.

In a special embodiment of this application, the at least one heat emitting part includes one or more of a system on chip, a modem, a housing of the power-consuming device, and a battery.

Based on this embodiment, the system on chip, the modem, the housing of the power-consuming device, and the battery are parts that are found by the inventor of this application and that can most affect the surface temperature. The parts usually generate much heat, thereby increasing the surface temperature. Historical temperatures of the parts are input to the prediction model, so that an accurate predicted temperature can be obtained, thereby improving a prediction effect.

In a special embodiment of this application, the historical temperature of the at least one heat emitting part is directly measured by using a temperature sensor; or the historical temperature of the at least one heat emitting part is calculated by using a temperature at another reference position, and the temperature at the another reference position includes a temperature of another part or structure other than the at least one heat emitting part of the power-consuming device.

Based on this embodiment, directly measuring historical temperature information by using the temperature sensor, or calculating historical temperature information by using the temperature at the reference position is an effective approach of obtaining the historical temperature. The former may improve timeliness and accuracy of obtaining the historical temperature, and the latter may reduce device costs and maintenance difficulty that are caused by direct measurement.

In a special embodiment of this application, the power-consuming device includes a central processing unit, a graphics processing unit, and a double data rate memory, and the input further includes one or more of load information of the central processing unit, load information of the graphics processing unit, and load information of the double data rate memory.

Based on this embodiment, a workload of the central processing unit, a workload of the graphics processing unit, and a workload of the double data rate memory usually directly affect an amount of heat emitted by the power-consuming device. The load information of the components is used as the input of the temperature prediction model, so that accuracy and objectivity of temperature prediction can further be improved.

In a special embodiment of this application, the power-consuming device further includes a cooling apparatus configured to cool a target component of the power-consuming device. To adjust the working status of the power-consuming device based on the predicted temperature, to control the surface temperature of the power-consuming device, first, a target cooling temperature of the target component may be determined based on the predicted temperature; and then, a working status of the cooling apparatus is controlled based on the target cooling temperature, to cool the target component to the target cooling temperature.

Based on this embodiment, in addition to an approach such as reducing working resources or a frequency, an active cooling manner is further provided to reduce a component temperature, so that a cooling approach may be enriched by using a plurality of methods, thereby implementing a quick and efficient cooling effect.

According to another aspect, this application provides an apparatus for controlling a surface temperature of a power-consuming device, including: an obtaining module, configured to obtain a historical temperature that is of at least one heat emitting part located inside and/or outside the power-consuming device and that is between a first moment and a second moment; a prediction module, configured to use the historical temperature as an input of a temperature prediction model, and output a predicted temperature of an external surface of the power-consuming device at a third moment after the first moment and the second moment, where the temperature prediction model represents a relationship between the historical temperature and the predicted temperature; and an adjustment module, configured to adjust a working status of the power-consuming device based on the predicted temperature, to control the external surface temperature of the power-consuming device.

In a special embodiment of this application, the adjustment module is further configured to: first, determine an amount of heat emitted by each of the at least one heat emitting part based on a working status and a heat capacity model of each heat emitting part, where the heat capacity model represents a mapping relationship between the working status of the heat emitting part and the amount of heat emitted by the heat emitting part; then, determine a resource restriction proportion of each heat emitting part based on the predicted temperature and the amount of heat emitted by each heat emitting part, where the resource restriction proportion indicates a reduction proportion of one or more of power consumption, a voltage, a frequency, and a load of the heat emitting part; and finally, control the working status of each heat emitting part based on the resource restriction proportion.

In a special embodiment of this application, the at least one heat emitting part includes a first heat emitting part, the first heat emitting part includes a plurality of heat emitting sub-parts, and the apparatus further includes: an allocation module, configured to allocate a resource restriction proportion of the first heat emitting part to the plurality of heat emitting sub-parts with a goal of maximizing performance of the first heat emitting part, to determine a resource restriction proportion of each of the plurality of heat emitting sub-parts; and a control module, configured to control a working status of each heat emitting sub-part based on the resource restriction proportion of each heat emitting sub-part.

In a special embodiment of this application, the allocation module is further configured to determine the resource restriction proportion of each heat emitting sub-part based on the resource restriction proportion of the first heat emitting part and a mapping table, where the mapping table records a plurality of resource restriction proportions corresponding to the first heat emitting part, and resource restriction proportions that are of the plurality of heat emitting sub-parts and that correspond to each of the plurality of resource restriction proportions.

In a special embodiment of this application, the adjustment module is further configured to: first, determine a resource restriction proportion of the power-consuming device based on the predicted temperature; and then, allocate the resource restriction proportion of the power-consuming device to the plurality of heat emitting parts based on the amount of heat emitted by each heat emitting part, to obtain the resource restriction proportion of each heat emitting part.

In a special embodiment of this application, the working status includes one or more of power consumption, a voltage, a frequency, and a load.

In a special embodiment of this application, the at least one heat emitting part includes one or more of a system on chip, a modem, a housing of the power-consuming device, and a battery.

In a special embodiment of this application, the historical temperature of the at least one heat emitting part is directly measured by using a temperature sensor; or the historical temperature of the at least one heat emitting part is calculated by using a temperature at another reference position, and the temperature at the another reference position includes a temperature of another part or structure other than the at least one heat emitting part of the power-consuming device.

In a special embodiment of this application, the power-consuming device includes a central processing unit, a graphics processing unit, and a double data rate memory, and the input further includes one or more of load information of the central processing unit, load information of the graphics processing unit, and load information of the double data rate memory.

In a special embodiment of this application, the power-consuming device further includes a cooling apparatus configured to cool a target component of the power-consuming device, and the adjustment module is further configured to: first, determine a target cooling temperature of the target component based on the predicted temperature; and then, control a working status of the cooling apparatus based on the target cooling temperature, to cool the target component to the target cooling temperature.

According to another aspect, this application provides a power-consuming device, where the power-consuming device includes a processor and a memory, and the processor is configured to execute a computer program stored in the memory, to implement the foregoing method for controlling a surface temperature of a power-consuming device.

According to another aspect, this application provides a computer-readable storage medium, where the computer-readable storage medium stores a computer program, and the computer program is configured to perform the foregoing method for controlling a surface temperature of a power-consuming device.

According to another aspect, this application provides a chip system, where the chip system includes a processor, the processor is coupled to a memory, and the processor executes a computer program stored in the memory, to implement the steps of the foregoing method for controlling a surface temperature of a power-consuming device.

According to another aspect, this application provides a computer program product, including program code. When a computer runs the computer program product, the computer is enabled to implement the foregoing method for controlling a surface temperature of a power-consuming device.

According to another aspect, this application provides a terminal, including a processor and a memory. The processor is configured to execute a computer program stored in the memory, to implement the foregoing method for controlling a surface temperature of a power-consuming device. The terminal may be a desktop computer, a notebook computer, a tablet computer, a smartphone, a smartwatch, a vehicle, virtual reality VR glasses, or the like.

Any one of the apparatus for controlling a surface temperature of a power-consuming device, the power-consuming device, the computer-readable storage medium, the computer program product, the chip system, or the terminal provided above is configured to perform the method for controlling a surface temperature of a power-consuming device provided above. Therefore, for beneficial effects that can be achieved by the apparatus, the power-consuming device, the computer-readable storage medium, the chip system, or the terminal, reference may be made to the beneficial effects of the corresponding solutions in the corresponding method provided above. Details are not described herein again.

## BRIEF DESCRIPTION OF DRAWINGS

The following describes specific implementations of this application in detail with reference to accompanying drawings.

FIG. 1 is a block diagram of a method for controlling a surface temperature of a power-consuming device according to an embodiment of this application;
FIG. 2 is a schematic flowchart of a method for controlling a surface temperature of a power-consuming device according to another embodiment of this application;
FIG. 3 is a diagram of a model training process in the method for controlling a surface temperature of a power-consuming device according to the embodiment in FIG. 2;
FIG. 4 is a diagram of a model prediction process in the method for controlling a surface temperature of a power-consuming device according to the embodiment in FIG. 2;
FIG. 5 is a schematic flowchart of a method for controlling a surface temperature of a power-consuming device according to another embodiment of this application;
FIG. 6 is a diagram of a heat capacity model between a working status and an amount of emitted heat in the method for controlling a surface temperature of a power-consuming device according to the embodiment in FIG. 5;

FIG. 7 is a diagram of a mapping relationship between a predicted temperature and a resource restriction proportion in the method for controlling a surface temperature of a power-consuming device according to the embodiment in FIG. 5;

FIG. 8 is a diagram of allocation of a resource restriction proportion in the method for controlling a surface temperature of a power-consuming device according to the embodiment in FIG. 5;

FIG. 9 is a diagram of allocation of resource restriction proportions of sub-components in the method for controlling a surface temperature of a power-consuming device according to the embodiment in FIG. 5;

FIG. 10 is a block diagram of a method for controlling a surface temperature of a power-consuming device according to another embodiment of this application;

FIG. 11 is a diagram of a structure of an apparatus for controlling a surface temperature of a power-consuming device according to an embodiment of this application;

FIG. 12 is a diagram of an architecture of a power-consuming device according to an embodiment of this application; and

FIG. 13 is a diagram of a structure of a power-consuming device according to another embodiment of this application.

**DESCRIPTION OF EMBODIMENTS**

To make a person skilled in the art understand a concept and an idea of this application more clearly, the following describes this application in detail with reference to specific embodiments. It should be understood that the embodiments provided in this specification are merely a component of all possible embodiments of this application. After reading the specification of this application, a person skilled in the art is capable of making improvements, modifications, or replacements to some or all of the following embodiments, and the improvements, modifications, or replacements also fall within the protection scope of this application.

In this specification, terms "a", "one", and other similar words do not mean that only one of the things exists, but indicate that related descriptions are for only one of the things, and the things may have one or more. In this specification, terms "contain", "include", and other similar words are intended to represent a logical relationship, but cannot be considered to represent a relationship in a spatial structure. For example, "A includes B" means that B belongs to A logically, but does not mean that B is spatially located inside A. In addition, meanings of the terms "contain", "include", and other similar words should be considered being open rather than being closed. For example, "A includes B" means that B belongs to A, but B does not necessarily constitute all of A, and A may further include other elements such as C, D, and E.

In this specification, terms "first", "second", and other similar words are not intended to imply any order, amount, or importance, but are merely used to distinguish between different elements. In this specification, terms "embodiment", "this embodiment", "an embodiment", and "one embodiment" do not mean that related descriptions are applicable to only one particular embodiment, but mean that the descriptions may further be applicable to one or more other embodiments. A person skilled in the art should understand that, in this specification, any description made for an embodiment may be replaced, combined, or combined in another manner with related descriptions in one or more other embodiments, and a new embodiment generated through replacement, combination, or combination in the another manner can be readily figured out by a person skilled in the art, and falls within the protection scope of this application.

In embodiments of this application, a power-consuming device may be a device that needs to use electric energy to work. In some embodiments of this application, a power-consuming device may be a device that generates or may generate heat because electric energy is input, and the heat may be apparently sensed by the outside or a human body. The power-consuming device may include, for example, a household appliance, an electric power facility, and an electronic product. The household appliance may include a television, a sound system, a telephone, and the like. The electric power facility may include various transformers, a switch, a transducer, and the like. The electronic product may include a computer (a desktop computer, a notebook computer, a tablet computer, a palmtop computer, a workstation, and the like), a smartphone, a smartwatch, AR (augmented reality, augmented reality) glasses, and the like.

In embodiments of this application, a surface temperature may be a temperature that is on a housing or an external surface of the power-consuming device and that can be sensed by the outside. Because a surface temperature is one of indicators that directly affect user experience of a power-consuming device, especially a power-consuming device that is often touched by a human body, prediction and control of the surface temperature become an important technical topic.

In some technologies in the art, a current temperature of a device is obtained by reading a temperature of a physical sensor. Emitted heat is reduced through calculation performed by using a temperature control algorithm and finally by limiting a frequency of a heat emitting component, thereby reducing a device temperature, and preventing damaging a component or scalding a user due to overheating of the device. To implement a temperature control algorithm technology, DVFS (dynamic voltage and frequency scaling, dynamic voltage and frequency scaling) is widely used in the industry, and a voltage and a frequency of a component are adjusted based on performance and a power consumption requirement of a chip, to reduce power consumption of and heat emitted by the component in a dynamic scenario. However, although the method provides a mechanism for dynamically adjusting a working status of a component, there are still many disadvantages, including a lack of a corresponding policy for determining how to adjust a status of the component in different scenarios to control heat emission.

In some technologies in the art, a software module includes a power arbiter (power arbiter), a power model (power model), and a temperature monitor (temperature monitor), and a hardware module includes a CPU (central processing unit, central processing unit), a GPU (graphics processing unit, graphics processing unit), a temperature sensor, and the like. Functions of the software module and the hardware module are as follows: Using a SOC (system on chip, system on chip) temperature as an input, total power consumption that can be allocated by a system is calculated by using a PID (proportional-integral-derivative, proportional-integral-derivative) algorithm in the power arbiter, the power consumption is allocated based on a power consumption requirement proportion reported by the component, and each component converts the allocated power consumption into an operational state by using a power consumption model. A logic (working/connection) relationship between software and hardware is as follows: The temperature monitor obtains a current temperature by using the temperature sensor, and the power arbiter obtains a reported power consumption value by using the power model and a working status of a component such as the CPU or the GPU, and allocates available power consumption to each component after calculation. Specific steps are as follows: (1) The temperature read by the SOC temperature sensor is used as the input. When the temperature reaches a threshold, algorithm logic is triggered. (2) A PID controller is used as a control algorithm, and the read SOC temperature is used as the input, to calculate a difference between the read SOC temperature and a preset target SOC temperature, to obtain a power consumption quota that can be allocated by an entire machine. The power consumption quota is allocated to each component to adjust a component status, thereby reducing the SOC temperature and achieving a control effect. (3) An IPA (intelligent power allocator, intelligent power allocator) obtains current power consumption reported by each power consumption component and calculates a relationship between a total reported power consumption and the power consumption quota that is output by the PID. If the total reported power consumption is less than the power consumption quota, it indicates that the system can currently increase power consumption supply and continue to allocate excess power consumption to a component that requires power consumption. If the total reported power consumption is greater than the power consumption quota, it indicates that the current power consumption quota of the system is insufficient. In this case, using the proportion as a power consumption restriction proportion of the component, the system recovers available power consumption of each component and lowers an operation status of the component, to reduce the SOC temperature.

The technologies can implement a function of controlling a SOC temperature of a device to some extent, and resolve an overheating problem of the device. However, a temperature of a rear housing cannot be accurately controlled, and temperature control accuracy is insufficient. Reasons for the disadvantages are as follows: (1) A control object of the IPA is the SOC temperature. A target temperature value is set for the SOC temperature, to control the SOC temperature to be close to a target temperature. However, in a terminal scenario, a main factor that affects user experience is the temperature of the rear housing, and impact on user experience is ignored when only the SOC temperature is controlled. (2) There is a lag between the temperature of the rear housing and the SOC temperature. Temperature control can affect the SOC temperature and indirectly affect a housing temperature only by controlling a component status. If an IPA algorithm input is simply changed to the temperature of the rear housing, the control is severely lagged, thereby causing a large fluctuation in the temperature and system resource restriction, and severely affecting system performance stability. (3) The IPA uses a power consumption model as a method for allocating resources to control heat emission. However, the temperature is affected by a factor such as a structure and a heat dissipation material. Therefore, heat emission and power consumption of a component are not equivalent, and an allocation algorithm based on the power consumption model is inaccurate.

Therefore, some embodiments of this application are dedicated to resolving the following technical problems: (1) resolving a time lag of adjusting the status of the SOC component to affect the SOC temperature, thereby indirectly controlling the temperature of the rear housing, improving temperature control stability, and improving performance stability; (2) resolving a problem that the power consumption model used in calculation of an amount of heat and distribution process has a deviation and cannot accurately control the temperature.

For a problem in the art that control of a surface temperature has a lag, some embodiments of this application provide a surface temperature prediction technology, to eliminate a control lag, perform intervention in advance. In this case, a temperature fluctuation is smaller, environment adaptability is better, and user temperature experience is better. For a problem in the art that an error exists in temperature control performed by using the power consumption model, some embodiments of this application provide a surface temperature control technology, so that temperature control is more accurate, a policy is more flexible, and performance is maximized during temperature control, thereby ensuring user performance experience. For a problem in the art of how to accurately collect statistics on heat emitted by a component and calculate an allocation proportion of each component, some embodiments of this application provide a heat source identification and resource allocation technology, to accurately control a status of a component and determine a control temperature.

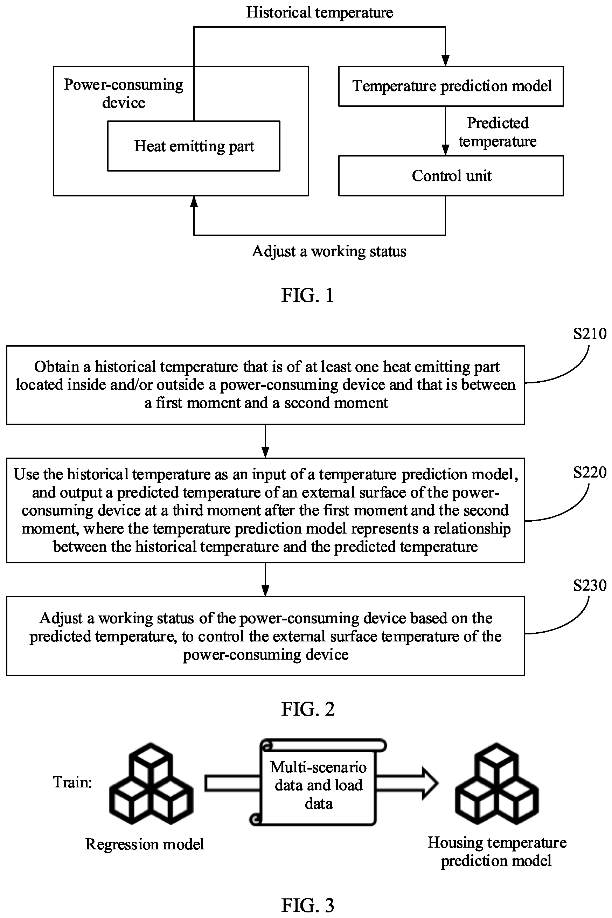

FIG. 1 is a block diagram of a method for controlling a surface temperature of a power-consuming device according to an embodiment of this application.

As shown in FIG. 1, in the method for controlling a surface temperature of a power-consuming device in this embodiment, historical temperature information is first obtained from several parts of the power-consuming device, and the part may be any part that may generate heat and that is on the power-consuming device. Then, the historical temperature information is input to a temperature prediction model, and a predicted temperature on a surface of the power-consuming device at a future moment is calculated by using the model. Finally, a control unit adjusts a working status of the power-consuming device based on the predicted temperature. The control unit may be a control unit inside the power-consuming device, or may be a control unit that is outside the power-consuming device and that is in a communication connection to the power-consuming device. The temperature prediction model may be integrated inside the control unit, or may be stored at another position, and is executed by the control unit or independently executed by another controller.

FIG. 2 is a schematic flowchart of a method for controlling a surface temperature of a power-consuming device according to another embodiment of this application.

Based on this embodiment, the method for controlling a surface temperature of a power-consuming device includes step S210 to step S230. The following describes the steps in detail.

S210: Obtain a historical temperature that is of at least one heat emitting part located inside and/or outside the power-consuming device and that is between a first moment and a second moment.

In this embodiment, the heat emitting part may be a part that can generate heat and that is inside or outside the power-consuming device. The heat emitting part of the power-consuming device may be on each power consumption component or core element inside the power-consuming device, or may be a housing, a support, or the like outside the power-consuming device. For example, the heat emitting part of the power-consuming device may be a part that can reflect an energy consumption feature of the power-consuming device and that can significantly affect overall heat emitting performance of the power-consuming device. Another type of heat emitting part may also be considered.

As an example, the at least one heat emitting part includes one or more of a system on chip, a modem, a housing of the power-consuming device, and a battery.

In this embodiment, the historical temperature may be a temperature value obtained by a temperature measurement element or a temperature calculation element during measurement or calculation, or may be a temperature value at another moment. The value is directly or indirectly obtained based on an actual situation or an operation status of the power-consuming device.

In this embodiment, the historical temperature between the first moment and the second moment may be a temperature at a moment (a time point) between the first moment and the second moment, may be an average temperature within a period of time between the first moment and the second moment, or may be a temperature obtained after temperature values obtained by sampling some time points between the first moment and the second moment are calculated. Another historical temperature calculation manner may also be figured out.

As an example, the historical temperature of the at least one heat emitting part is directly measured by using a temperature sensor.

Specifically, the temperature sensor may be a sensor that can sense a temperature and convert the temperature to an available output signal. Measurement manners may be classified into a contact type and non-contact type, and may be classified into a thermal resistor and a thermocouple based on a sensor material and a characteristic of an electronic element. In some embodiments, a part may include an internal component and/or a housing, and the predicted temperature may be calculated jointly based on historical temperature information of the internal component and/or the housing. This can improve accuracy of the historical temperature information.

In this example, the temperature sensor may obtain a temperature value of a corresponding position based on different hardware characteristics at different temperatures. In a terminal device, a temperature sensor usually exists at each key node, such as a SOC node or a modem node. For example, the temperature sensor may be a sensor that monitors a temperature on a SOC or a rear housing of a mobile phone, for example, an ADC (analog to digital converter, analog to digital converter).

As an example, the historical temperature of the at least one heat emitting part is calculated by using a temperature at another reference position, and the temperature at the another reference position includes a temperature of another part or structure other than the at least one heat emitting part of the power-consuming device.

Specifically, a historical temperature of a housing is calculated based on temperatures of a plurality of reference positions, and then a surface temperature at a future moment is predicted based on the calculated historical temperature. In this way, the temperature sensor on a surface of the housing may be eliminated, so that a surface of the power-consuming device is simpler and easy to maintain.

In the example, the surface temperature sensor may be a non-physical sensor, and is obtained by fitting data of sensors at other positions (reference positions), such as a room temperature sensor, a SOC node temperature sensor, a system high-temperature area temperature sensor, and a mainboard temperature sensor.

S220: Use the historical temperature as an input of a temperature prediction model, and output a predicted temperature of an external surface of the power-consuming device at a third moment after the first moment and the second moment, where the temperature prediction model represents a relationship between the historical temperature and the predicted temperature.

In this embodiment, the temperature prediction model may be a machine learning model or another artificial intelligence model used to predict a temperature. The machine learning model may be an algorithm or a mathematical function that can convert input data into a specific output. The algorithm or the mathematical function is a core assembly of machine learning. By training data, the machine learning model may automatically learn and improve itself, so that the machine learning model processes new data more accurately and effectively. The machine learning model is usually based on a particular algorithm or model structure. For example, a linear regression model models an output variable from data by using a linear equation; a decision tree model classifies or predicts data based on a tree structure; and a neural network model processes a complex data pattern by using a plurality of layers of neurons.

The linear regression model may be a mathematical model that determines a quantitative relationship of interdependence between two or more variables through regression analysis in mathematical statistics. For example, linear regression is regression analysis that models a relationship between one or more independent variables and dependent variables by using a minimum square function that is referred to as a linear regression equation. This function is a linear combination of one or more model parameters that are referred to as regression coefficients. Regression with only one independent variable is referred to as simple regression, and regression with more than one independent variable is referred to as multiple regression.

The neural network model may be a mathematical model described based on a mathematical model of neurons, and is represented by a network topology, a node characteristic, and a learning rule. For example, a neural network is a complex network system formed by a large quantity of simple processing units (which are referred to as neurons) that are widely connected to each other. The neural network reflects a plurality of basic features of functions of a human brain, and is a highly complex non-linear dynamic learning system. The neural network model includes a convolutional neural network model (CNN), a deep neural network model (DNN), and the like.

In this embodiment, the external surface temperature may be predicted by using the machine learning model, to record the historical temperature to predict a future temperature of the housing. An input of the model is a factor that affects a future temperature of a rear housing of a device. The data is stored as a segment of historical data, and after being calculated by using a model, is output as a future temperature on a surface of the device after a period of time. During prediction of the surface temperature, data of core temperatures and housing temperatures in a plurality of scenarios may be collected offline, to train a surface temperature prediction model for predicting a future temperature. During operation, a system dynamically collects a historical core temperature and a historical housing temperature, and predicts a future surface temperature by using the surface temperature prediction model.

In this embodiment, the external surface temperature may be predicted by using a machine learning model, to record the historical temperature to predict the future surface temperature. For example, a surface temperature after n seconds may be predicted based on a SOC temperature, a surface temperature, and the like before n seconds by using the linear regression model. Specifically, change data of the SOC temperature and the surface temperature in a plurality of scenarios may be first pre-collected; then, a prediction model of the historical temperature to the surface temperature is pre-trained in an offline environment; then, data of the SOC temperature and the surface temperature within n seconds is collected online; and finally, the surface temperature after n seconds is predicted by using the prediction model based on historical data. This embodiment may be extended to a more complex model with more temperature sensors as inputs.

FIG. 3 shows an example of a training process of a machine learning model in the method for controlling a surface temperature of a power-consuming device according to this embodiment. As shown in FIG. 3, in this example, a temperature prediction model is a regression model. In the training process, the temperature prediction model (for example, a housing temperature prediction model) is trained by feeding temperature and load data of a plurality of scenarios into the regression model.

As an example, the power-consuming device includes a central processing unit, a graphics processing unit, and a double data rate memory, and an input further includes one or more of load information of the central processing unit, load information of the graphics processing unit, and load information of the double data rate memory.

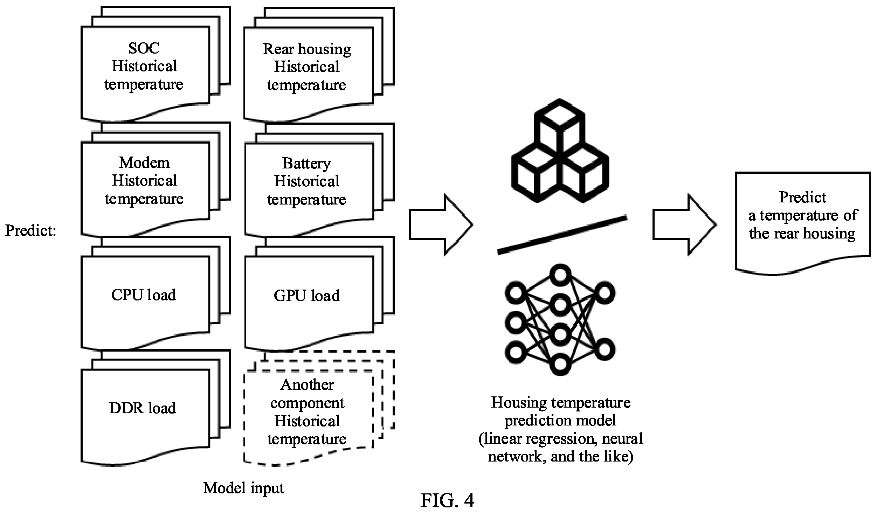

FIG. 4 shows an example of a prediction process of a machine learning model in the method for controlling a surface temperature of a power-consuming device according to this embodiment. As shown in FIG. 4, in this example, a temperature prediction model is a linear regression model or a neural network model. In the prediction process, a historical SOC temperature, a historical rear housing temperature, a historical modem (modem) temperature, a historical battery (battery) temperature, a CPU load, a GPU load, a DDR (double data rate, double data rate) memory load, and (optionally) a historical temperature of another component are input to the machine learning model (for example, a housing temperature prediction model), to calculate a predicted surface (for example, a rear housing) temperature.

In this embodiment, a future moment may be a moment after a moment of the historical temperature. A specific time of a future moment may be set based on a temperature prediction requirement and a characteristic of the power-consuming device. For example, for a power-consuming device whose temperature changes rapidly, a future moment may be early, and for a large-scale power-consuming device whose temperature changes slowly, a future moment may be late. For a common electronic device, a future moment may be, for example, a moment after future several seconds, a dozen of seconds, or even dozens of seconds.

In this embodiment, the predicted temperature may be a temperature value that may be generated or reached in the future and that is calculated by using the temperature prediction model.

S230: Adjust a working status of the power-consuming device based on the predicted temperature, to control the external surface temperature of the power-consuming device.

In this embodiment, the working status of the power-consuming device may be various indicators related to working and operation of the entire power-consuming device or each part (components, parts, and the like) of the power-consuming device, especially indicators related to energy consumption and an amount of heat, such as an operating frequency, an operating voltage, a working load, a working temperature, electric energy consumed during working, and an amount of heat generated during working.

As an example, the working status includes one or more of power consumption, a voltage, a frequency, and a load.

In this embodiment, to adjust the working status of the power-consuming device based on the predicted temperature, a threshold may be set. Once the predicted temperature reaches the threshold, energy consumption of the power-consuming device is reduced, or even the power-consuming device is shut down. Alternatively, a reference value may be calculated based on the predicted temperature, and when the reference value enters a range, power consumption or a load of the power-consuming device is controlled. Another technical means of controlling the working status based on the predicted temperature may also be figured out.

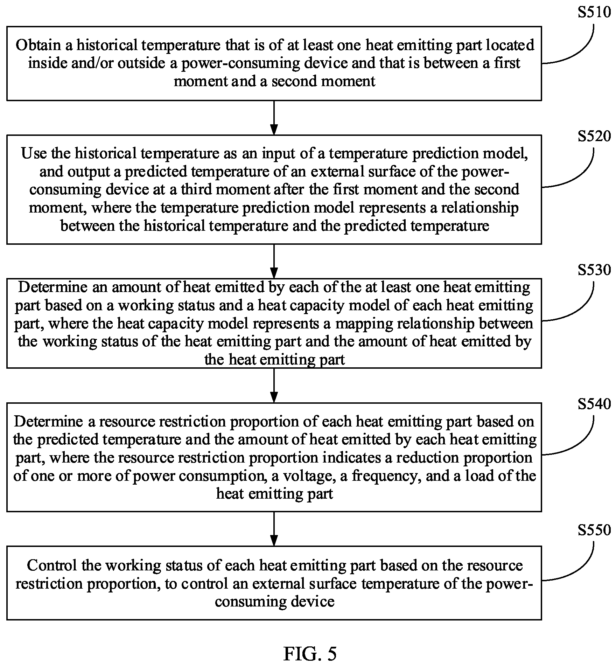

FIG. 5 is a schematic flowchart of a method for controlling a surface temperature of a power-consuming device according to an embodiment of this application. In this embodiment, a working status of a heat emitting component is controlled by allocating a resource restriction proportion of a device.

Based on this embodiment, the method for controlling a surface temperature of a power-consuming device includes steps S510 to S570, and the following describes the steps in detail.

S510: Obtain a historical temperature that is of at least one heat emitting part located inside and/or outside the power-consuming device and that is between a first moment and a second moment.

S520: Use the historical temperature as an input of a temperature prediction model, and output a predicted temperature of an external surface of the power-consuming device at a third moment after the first moment and the second moment, where the temperature prediction model represents a relationship between the historical temperature and the predicted temperature.

For details of S510 and S520, refer to the detailed descriptions of S210 and S220 in the embodiment in FIG. 2. Details are not described herein again.

S530: Determine an amount of heat emitted by each of the at least one heat emitting part based on a working status and a heat capacity model of each heat emitting part, where the heat capacity model represents a mapping relationship between the working status of the heat emitting part and the amount of heat emitted by the heat emitting part.

In this embodiment, a working status may be a working status of a heat emitting component at a specific moment or at a current moment of measurement or calculation, may be a quantitative indicator such as an operating frequency or an operating voltage, or may be a qualitative indicator such as low load, full load, or overload. A working status in another form may also be figured out.

In this embodiment, a working status of each heat emitting component may be directly obtained from the heat emitting component, or may be obtained from an input or output port for the heat emitting component. For example, a monitor is disposed on an input line of the heat emitting component, to monitor an input voltage of the heat emitting component. Another obtaining manner may also be figured out.

In this embodiment, a heat capacity model between a working status of each of a plurality of heat emitting components and an amount of heat emitted by each heat emitting component may be established through a test. The test may be simulating an actual working process of the heat emitting component through an approach such as controlling a variable or the like, to obtain a mapping relationship between a working status and an amount of emitted heat in the working process. For example, a heat emitting component in a device is taken out or installed in an original position, a current that is input to the heat emitting component, or a working indicator or parameter of another heat emitting component is controlled to obtain an amount of heat emitted by the heat emitting component in a corresponding state, then these values are recorded, and a heat capacity model is obtained through calculation by sorting out these values or based on these values.

In this embodiment, the working status may be working-related indicators or parameters of the heat emitting component that can be obtained through measurement or directly obtained. A working condition or an operation status of the heat emitting component, for example, whether the heat emitting component runs with full load or whether working efficiency of the heat emitting component is reduced, can be determined by determining the indicators or parameters. The amount of emitted heat may be an amount of heat generated by the heat emitting component in a working status (such as an operating voltage or frequency) or another temperature value that can be obtained through an external measurement approach. The amount of heat or temperature actually affects an amount of heat emitted by the entire device or a surface temperature of the entire device. The heat capacity model may be a model that can reflect a correspondence between the working status and the amount of emitted heat, and may be a function, a table, an algorithm model, a machine learning model, or the like. For example, if there is a linear correlation model between the working status and the amount of emitted heat, the heat capacity model is a linear function. For another example, if a relationship between the working status and the amount of emitted heat is complex and is not clearly linear, the relationship between the working status and the amount of emitted heat may be calculated or fitted based on a non-linear function model or a machine learning model, to obtain a corresponding heat capacity model.

In this embodiment, to establish a heat capacity model, a heat capacity parameter of a component may be obtained through a test. Then, the heat capacity model of the component is constructed, statistics about an operation status such as a frequency of the component is collected in real time, and an amount of heat emitted by the component is calculated. For example, component heat capacity parameters of each heat emitting component in different working statuses are first obtained through an offline test. During operation, statistics about working status distribution of each heat emitting component in a previous cycle are cyclically collected, and an amount of emitted heat corresponding to each component is calculated. For another example, a table of a correspondence (a heat capacity model) between a working status (a frequency, a voltage, or the like) of each component and a temperature rise of a corresponding temperature area may be first obtained through a thermal test; then an operation status of each component in a system may be obtained in real time; and finally, an amount of emitted heat may be calculated based on the operation status and the heat capacity model of the component.

In this embodiment, to establish a heat capacity model and identify a heat source, a correlation between different operation statuses of each component (including different operation statuses of sub-components of the component) and heat emission can be obtained through a test. A heat model for each component is established. Statistics about an operation status of the component within a period of time is collected in real time, and an amount of heat emitted by each component is calculated based on the heat model. A total resource restriction proportion of the system obtained by a housing temperature control module is proportionally allocated based on an amount that is of heat emitted by the component and that is obtained by a heat source identification module, to obtain a use restriction proportion of each component, and a component with a larger amount of emitted heat is allocated a larger restriction proportion.

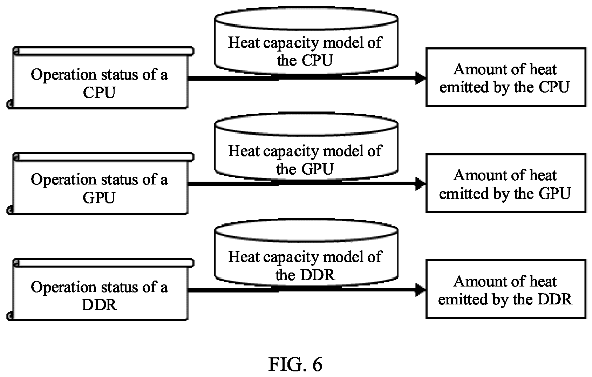

FIG. 6 shows an example of a heat capacity model between a working status and an amount of emitted heat in the method for controlling a surface temperature of a power-consuming device according to this embodiment. As shown in FIG. 6, different heat capacity models may be established based on different characteristics of each heat emitting component. In FIG. 6, heat emitting components include a CPU, a GPU, and a DDR. The CPU, the GPU, and the DDR respectively have an operation status (namely, a working status) of the CPU and an amount of heat emitted by the CPU, an operation status of the GPU and an amount of heat emitted by the GPU, and an operation status of the DDR and an amount of heat emitted by the DDR. A CPU heat capacity model may be established between the operation status of the CPU and the amount of heat emitted by the CPU. A GPU heat capacity model may be established between the operation status of the GPU and the amount of heat emitted by the GPU. A DDR heat capacity model may be established between the operation status of the DDR and the amount of heat emitted by the DDR. A person skilled in the art should appreciate that in addition to these components, a heat capacity model between a working status and an amount of emitted heat may further be established for another component (such as a battery, a modem, or a SOC).

In this embodiment, to determine, based on the working status of each heat emitting component and the heat capacity model of each heat emitting component, the amount of heat emitted by each heat emitting component, a value of the working status may be input to the heat capacity model, or the working status may be converted into a specific value and the specific value may be input to the heat capacity model, and the amount of heat emitted by each heat emitting component is calculated based on the model or is fitted. Alternatively, an intermediate value may be calculated based on a value of the working status and another parameter, then the intermediate value may be input to the heat capacity model, and the amount of heat emitted by the heat emitting component may be calculated or fitted. Another manner may also be figured out.

S540: Determine a resource restriction proportion of each heat emitting part based on the predicted temperature and the amount of heat emitted by each heat emitting part, where the resource restriction proportion indicates a reduction proportion of one or more of power consumption, a voltage, a frequency, and a load of the heat emitting part.

In this embodiment, a resource restriction proportion may be a reduction proportion of power consumption, a frequency, a voltage, or another resource required to be consumed for normal working of the power-consuming device. The resource restriction proportion of the power-consuming device may be an overall resource restriction proportion for the device, which indicates an extent to which a used resource (energy consumption, an operating frequency, a voltage, or the like) of the device is restricted, and may be expressed as a percentage.

In this example, to determine the resource restriction proportion of the power-consuming device based on the predicted temperature, it may be first determined, based on the predicted temperature, whether a resource of the power-consuming device needs to be restricted. If the predicted temperature exceeds a threshold, or a magnitude or rate of an increase exceeds a threshold, it is determined that the resource of the power-consuming device needs to be restricted. Then, the resource restriction proportion that needs to be used by the entire device is determined based on a relationship between a value of the predicted temperature and the threshold; or an intermediate parameter is calculated based on a value of the predicted temperature, and the resource restriction proportion is determined based on the intermediate parameter. Certainly, the person skilled in the art may figure out another manner of determining the resource restriction proportion of the device based on the predicted temperature.

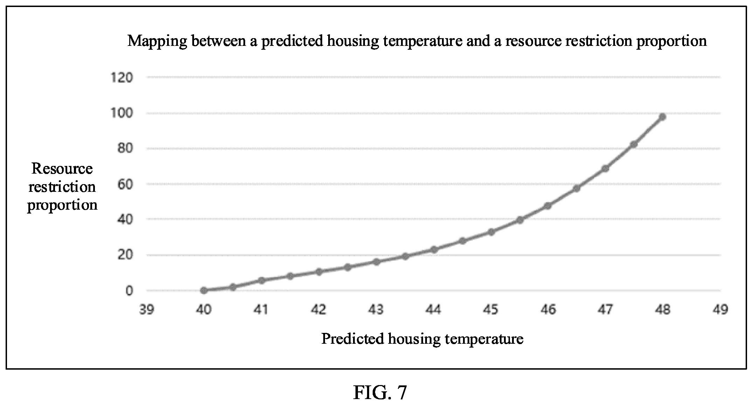

FIG. 7 is a diagram of a mapping relationship between a predicted surface temperature and a resource restriction proportion in the method for controlling a surface temperature of a power-consuming device according to this embodiment. As shown in FIG. 7, a mapping relationship table between a predicted surface temperature and a resource restriction proportion is established based on a heat model. When the surface temperature reaches 40 degrees, restriction starts, and when the surface temperature reaches 48 degrees, the restriction is 100%. Based on the predicted surface temperature, a total resource restriction proportion of a system is found.

To control the surface temperature, system resources may be restricted based on the predicted surface temperature. An overall trend herein is that a higher predicted surface temperature indicates a larger restriction proportion of the system resources, that is, an amount of heat emitted by a heat emitting component is reduced to a larger extent, thereby quickly reducing a temperature. During control of the surface temperature, a heat model between different resource restriction proportions of the system and the surface temperature may be obtained through a test, and the total resource restriction proportion of the system is calculated from the heat model based on a future surface temperature obtained by a surface temperature prediction module.

S540: Determine a resource restriction proportion of each heat emitting part based on the predicted temperature and the amount of heat emitted by each heat emitting part, where the resource restriction proportion indicates a reduction proportion of one or more of power consumption, a voltage, a frequency, and a load of the heat emitting part.

In this embodiment, the resource restriction proportion of each heat emitting component may be a resource restriction proportion for a single component, indicating an extent to which a used resource (a frequency, a voltage, or the like) of the component is restricted, and may be expressed as a percentage.

In this embodiment, to allocate a resource restriction proportion of the power-consuming device to a plurality of heat emitting components based on the amount of heat emitted by each heat emitting component, to obtain the resource restriction proportion of each heat emitting component, first, whether resource restriction needs to be performed on each of the plurality of heat emitting components or an extent of resource restriction to be performed on each of the plurality of heat emitting components may be determined based on the amount of heat emitted by each of the plurality of heat emitting components (and a performance characteristic of each of the plurality of heat emitting components). Then, the overall resource restriction proportion of the device is allocated to each heat emitting component based on this result. In this way, a resource restriction proportion with a large value is obtained for a component on which restriction needs to be performed to a large extent, and a resource restriction proportion with only a small value is obtained for a component on which restriction needs to be performed to a small extent. Another allocation manner may also be figured out.

In this embodiment, the resource restriction proportion may be allocated based on a proportion of an amount of emitted heat. A principle of allocating the resource restriction proportion based on the proportion of the obtained amount of heat emitted by each heat emitting component within each execution cycle is as follows: A resource restriction proportion is larger for a component with a large amount of emitted heat, and a resource restriction proportion is smaller for a component with a small amount of emitted heat.

In this embodiment, the resource restriction proportion may be allocated based on a proportion of an amount of emitted heat. For example, a proportion of resources that can be obtained by each component may be calculated based on the following formula:

$$p_i = p + \frac{t_i}{\sum t}(1 - p)$$

where in the formula, $p$ is a total resource proportion obtained through housing temperature control, $t_i$ is an amount of heat emitted by a component $i$, and $p_i$ is a proportion of resources allocated to the component $i$. For a component that has a plurality of sub-components (for example, a CPU has a plurality of clusters), a resource restriction proportion of the sub-component can inherit a restriction proportion of the component. When the resource restriction proportion of the component is allocated, for a component having a plurality of submodules, an optimization problem may be resolved based on heat emission (a heat model) and performance of each submodule in different operation statuses, and under a condition of meeting a temperature rise restriction of the component, so that a sub-component restriction combination achieves optimal performance.

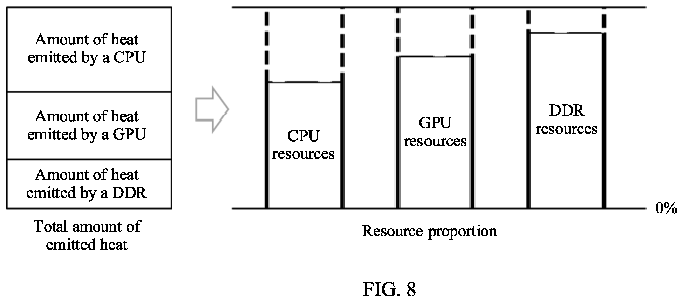

FIG. 8 shows an example of allocation of a resource restriction proportion in the method for controlling a surface temperature of a power-consuming device according to this embodiment. As shown in FIG. 8, heat emitting components may include a CPU, a GPU, and a DDR. The CPU has a highest amount of emitted heat (that is, a working temperature), the GPU has a second highest amount of emitted heat, and the DDR has a lowest amount of emitted heat. Therefore, a CPU resource restriction proportion is the highest, a GPU resource restriction proportion is the second highest, and a DDR resource restriction proportion is the lowest. In other words, different component resource restriction proportions are allocated to the CPU, the GPU, and the DDR based on different working temperatures of the CPU, the GPU, and the DDR. For example, a component with a higher working temperature has a larger component resource restriction proportion allocated.

S550: Control the working status of each heat emitting part based on the resource restriction proportion, to control an external surface temperature of the power-consuming device.

In this embodiment, to control a working status of each heat emitting component based on the resource restriction proportion of each heat emitting component, an operating frequency of the heat emitting component or an operating voltage or current of the heat emitting component may be controlled based on the proportion. Control may be directly performed based on the resource restriction proportion of each heat emitting component, for example, an operating frequency is reduced by one proportion. The proportion is equal to the resource restriction proportion. Alternatively, control may be indirectly performed based on the resource restriction proportion. For example, an intermediate parameter or proportion is calculated based on the restriction proportion, and then the heat emitting component is controlled based on the intermediate proportion. Another control manner may also be figured out.

In this embodiment, to implement component cooling control, a working status of the heat emitting component may be adjusted, to reduce emitted heat. For example, component cooling control may be implemented based on an obtained target resource restriction proportion of each heat emitting component by invoking a corresponding interface provided by a hardware driver.

Specifically, to control the working status of each heat emitting component, a capability of a maximum operation frequency of a component such as a CPU, a GPU, or a DDR may be dynamically adjusted in a dynamic frequency adjustment manner, for example, by using a DVFS technology.

As an example, the at least one heat emitting part includes a first heat emitting part, and the first heat emitting part includes a plurality of heat emitting sub-parts. In this case, the method for controlling a surface temperature of a power-consuming device may further include: allocating a resource restriction proportion of the first heat emitting part to the plurality of heat emitting sub-parts with a goal of maximizing performance of the first heat emitting part, to determine a resource restriction proportion of each of the plurality of heat emitting sub-parts; and controlling a working status of each heat emitting sub-part based on the resource restriction proportion of each heat emitting sub-part.

As an example, to allocate the resource restriction of the first heat emitting part to the plurality of heat emitting sub-parts, the resource restriction proportion of each heat emitting sub-part may be determined based on the resource restriction proportion of the first heat emitting part and a mapping table, where the mapping table records a plurality of resource restriction proportions corresponding to the first heat emitting part, and resource restriction proportions that are of the plurality of heat emitting sub-parts and that correspond to each of the plurality of resource restriction proportions.

In this example, the first heat emitting component may be a component having a plurality of sub-components. The sub-components may have independent functions, energy consumption performance, or performance feature. Control on the sub-components may directly or indirectly affect heat emission or energy consumption of the entire component.

In this example, a mapping table between a resource restriction proportion of the first heat emitting component and resource restriction proportions of the plurality of heat emitting sub-components of the first heat emitting component may be a mapping table used to describe a relationship between a value of the resource restriction proportion of the first heat emitting component and values of the resource restriction proportions of the heat emitting sub-components. By using the mapping table, a resource restriction proportion that should be obtained by each heat emitting sub-component may be quickly determined based on a given value of the resource restriction proportion of the first heat emitting component, thereby restricting a resource or a working indicator of the heat emitting sub-component.

In this example, the resource restriction proportion of each heat emitting sub-component is determined based on the resource restriction proportion of the first heat emitting component and the mapping table. The mapping table may be queried for the resource restriction proportion of each heat emitting sub-component based on the value of the resource restriction proportion of the first heat emitting component. Restriction proportion values of the heat emitting sub-components may be directly obtained from the mapping table, or restriction proportion values of the heat emitting sub-components may be calculated based on values in the mapping table. Another method for obtaining the resource restriction proportion of the heat emitting sub-component by using the mapping table may also be figured out.

In this example, for the first heat emitting component having a plurality of heat emitting sub-components (for example, a CPU has a plurality of clusters), the resource restriction proportion of the heat emitting sub-component may be selected in a manner of maximizing performance under a temperature restriction condition. The problem can formally be defined as follows:

$$max\, Cap = \sum cap_i$$

$$s.t. \sum \Delta t_i < T$$

where in the formula, is performance of the sub-component, $\Delta$ is a temperature rise of the sub-component, and T is a temperature rise of the component.

In this example, to establish a relationship between the resource restriction proportion of the first heat emitting component and the resource restriction proportion of each heat emitting sub-component, a mapping table of a combination of a CPU restriction proportion and an optimal restriction proportion of the sub-component may be specifically constructed, and an optimal restriction combination of the sub-component is searched for based on the table.

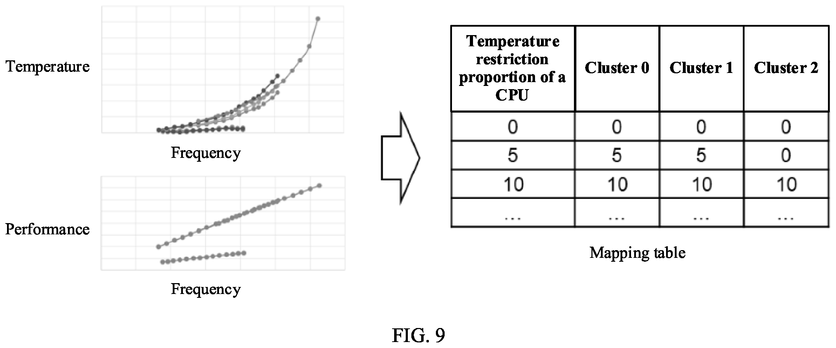

FIG. 9 shows an example of allocation of resource restriction proportions of heat emitting sub-components in the method for controlling a surface temperature of a power-consuming device according to this embodiment. As shown in FIG. 9, a mapping table between a resource restriction proportion of the first heat emitting component and a resource restriction proportion of the heat emitting sub-component may be established based on a temperature-a frequency characteristic and performance-a frequency characteristic of each heat emitting sub-component. In FIG. 9, a CPU and a plurality of clusters (cluster) included in the CPU are used as an example. When a temperature restriction proportion of the CPU (that is, the resource restriction proportion of the first heat emitting component) is 0, a resource of the heat emitting sub-component does not need to be restricted. Therefore, resource restriction proportions of a cluster 0, a cluster 1, and a cluster 2 are all 0. When a temperature restriction proportion of the CPU is 5 (for example, 5%), resource restriction proportions of a cluster 0 and a cluster 1 is 5 and a resource restriction proportion of a cluster 2 is 0 based on characteristics of different heat emitting sub-components. When a temperature restriction proportion of the CPU is 10, resource restriction proportions of a cluster 0, a cluster 1, and a cluster 2 are all 10 based on characteristics of different heat emitting sub-components.

As an example, the power-consuming device further includes a cooling apparatus configured to cool a target component of the power-consuming device. In this case, to adjust the working status of the power-consuming device based on the predicted temperature, to control the surface temperature of the power-consuming device, first, a target cooling temperature of the target component may be determined based on the predicted temperature; and then, a working status of the cooling apparatus is controlled based on the target cooling temperature, to cool the target component to the target cooling temperature.

In this example, to reduce a temperature of a target heat emitting component or a part, in addition to adjusting a working status and a consumed resource of the component, the working status of the cooling apparatus configured to dissipate heat or cool the component may further be adjusted. When the temperature of the target component is excessively high and cooling with relatively high intensity is required, the working status of the cooling apparatus may be adjusted to high-intensity operation, to increase heat dissipation intensity, so that a temperature reduction magnitude of the target component is large. When the temperature of the target component is low, and cooling at only a small amplitude is required, the working status of the cooling apparatus may be adjusted to low-intensity operation, to reduce heat dissipation intensity, so that a temperature reduction magnitude of the target component is small.

Specifically, the method for controlling a surface temperature of a power-consuming device according to this embodiment may be applied to a PC (personal computer, personal computer) or notebook computer platform. A difference from a terminal platform lies in that a cooling device on the PC or notebook computer platform is in an active cooling manner, for example, a fan, while a cooling device on the terminal platform is in a passive manner in which cooling is achieved by reducing a component frequency. A technical solution on the PC platform can partially change the cooling device from a heat capacity model to a fan heat dissipation capability model. On the notebook platform, the surface temperature in this embodiment of this application may be specifically limited to, for example, a housing temperature or a keyboard temperature.

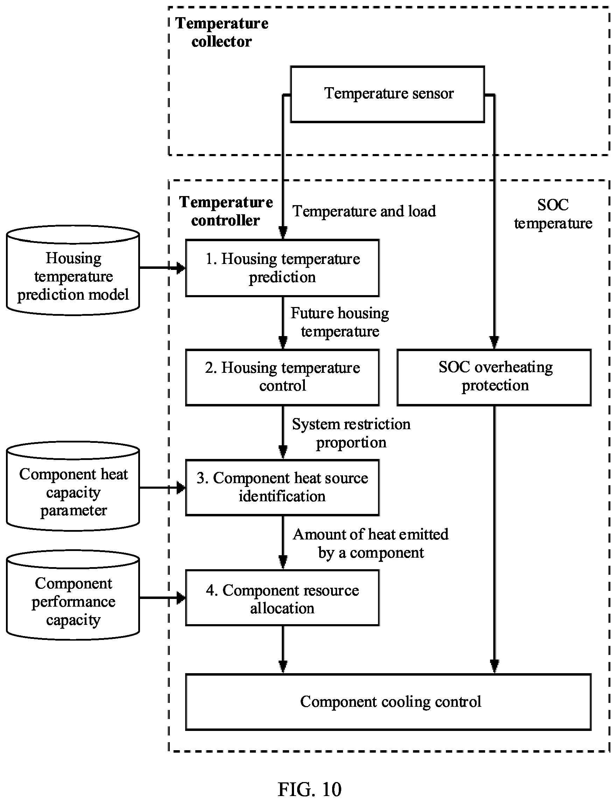

FIG. 10 is a block diagram of a method for controlling a surface temperature of a power-consuming device according to an embodiment of this application. A difference between this embodiment and another embodiment lies in that, in this embodiment, the surface temperature of the power-consuming device is specifically a housing temperature (housing temperature), and a SOC overheating protection mechanism is set.

Based on this embodiment, a temperature sensor obtains a temperature value of a corresponding position based on different hardware characteristics at different temperatures. A housing temperature prediction module records a historical temperature by using a machine learning model, to predict a future housing temperature. A housing temperature control module restricts system resources based on the predicted housing temperature. A component heat source identification module obtains a component heat capacity parameter through a test, constructs a heat capacity model of a component, collects statistics about an operation status such as a frequency of the component in real time, and calculates an amount of heat emitted by the component. A component heat source allocation module allocates a resource restriction proportion based on a proportion of the amount of emitted heat. A component cooling control module adjusts a working status of the heat emitting component, to reduce emitted heat. A SOC overheating protection module controls a component temperature of the power-consuming device based on a temperature obtained by directly measuring a SOC, to prevent the SOC from overheating, and avoid a deviation or a lag effect that may be brought by indirectly controlling a component temperature based on the housing temperature, thereby implementing dual protection on the SOC.

In this embodiment, the housing temperature prediction module obtains required temperature data by using a hardware temperature sensor, obtains a target working status of a component after processing performed by a subsequent module, and finally adjusts hardware to a corresponding working status.

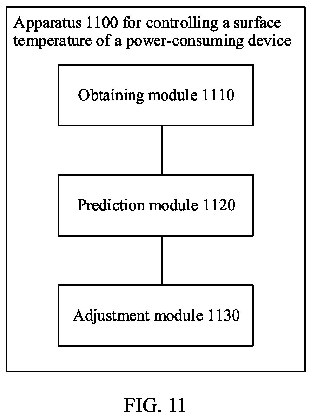

Based on the foregoing method embodiment in FIG. 2, an embodiment of this application further provides an apparatus 1100 for controlling a surface temperature of a power-consuming device. A diagram of a structure of the apparatus 1100 is shown in FIG. 11. The apparatus is configured to perform the steps in FIG. 2.

Based on this embodiment, the apparatus for controlling a surface temperature of a power-consuming device includes an obtaining module 1110, a prediction module 1120, and an adjustment module 1130. The obtaining module 1110 is configured to obtain a historical temperature that is of at least one heat emitting part located inside and/or outside the power-consuming device and that is between a first moment and a second moment. The prediction module 1120 is configured to use the historical temperature as an input of a temperature prediction model, and output a predicted temperature of an external surface of the power-consuming device at a third moment after the first moment and the second moment, where the temperature prediction model represents a relationship between the historical temperature and the predicted temperature. The adjustment module 1130 is configured to adjust a working status of the power-consuming device based on the predicted temperature, to control the external surface temperature of the power-consuming device.

It should be noted that, when the apparatus 1100 for controlling a surface temperature of a power-consuming device provided in the embodiment shown in FIG. 11 performs the method for controlling a surface temperature of a power-consuming device, descriptions are provided only with an example of division of the foregoing function modules. In practical applications, the foregoing functions may be allocated to and completed by different function modules according to requirements. That is, the internal structure of the apparatus is divided into different function modules to complete all or some of the functions described above. In addition, the apparatus 1100 for controlling a surface temperature of a power-consuming device provided in the foregoing embodiment and the method embodiment shown in FIG. 2 separately belong to a same concept. For a specific implementation process, refer to the method embodiment, and details are not described herein again.

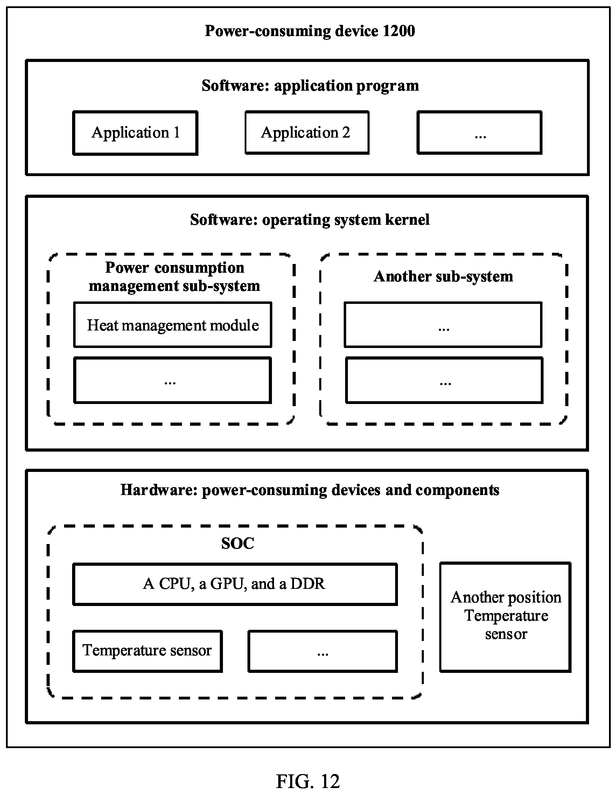

FIG. 12 is a diagram of an architecture of a power-consuming device 1200 according to an embodiment of this application. A difference between this embodiment and another embodiment lies in that, in this embodiment, the power-consuming device is specifically an electronic product, such as a computer, a smartphone, and a smartwatch, and includes software and hardware. The software includes an operating system and an application program, and the hardware includes a CPU, a GPU, and the like.

The power-consuming device 1200 in this embodiment provides a product implementation form of a method for controlling a surface temperature of a power-consuming device, and may be program code that is included in an operating system kernel and that is deployed on hardware of a terminal device. As shown in FIG. 12, the program code for performing the method for controlling a surface temperature of a power-consuming device exists in the operating system kernel of the platform software. During operation, the program code runs in a host memory of the terminal device. FIG. 12 shows an implementation form of the method for controlling a surface temperature of a power-consuming device in a server and platform software. A heat management module shown in the figure is a module modified based on the platform software in this embodiment. Inside the heat management module, the power-consuming device 1200 implements housing temperature prediction, housing temperature control, component heat source identification, component resource allocation, and SOC overheating protection.

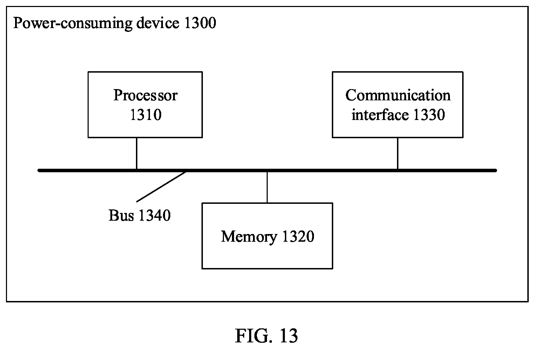

FIG. 13 is a diagram of a hardware structure of a power-consuming device 1300 according to another embodiment of this application.

As shown in FIG. 13, the power-consuming device 1300 includes a processor 1310, a memory 1320, a communication interface 1330, and a bus 1340. The processor 1310, the memory 1320, and the communication interface 1330 are connected to each other through the bus 1340. The processor 1310, the memory 1320, and the communication interface 1330 may alternatively be connected in another connection manner other than the bus 1340.

The memory 1320 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a hard disk.

The processor 1310 may be a general-purpose processor, and the general-purpose processor may be a processor that performs a specific step and/or operation by reading and executing content stored in a memory (for example, the memory 1320). For example, the general-purpose processor may be a CPU. The processor 1310 may include at least one circuit, to perform all or some steps of the method for controlling a surface temperature of a power-consuming device provided in the embodiment shown in FIG. 2.

The communication interface 1330 includes an input/output (input/output, I/O) interface, a physical interface, a logical interface, and the like that are configured to implement an interconnection between components inside the power-consuming device 1300, and an interface that is configured to implement an interconnection between the power-consuming device 1300 and another device (for example, another power-consuming device or user equipment). The physical interface may be an Ethernet interface, an optical interface, an ATM interface, or the like. The communication interface 1330 may be externally connected to an input apparatus and an output apparatus. For example, the input apparatus may be a microphone or a microphone array, configured to capture a voice input signal; or may be a communication network connector, configured to receive a captured input signal from a cloud or another device; and may further include, for example, a keyboard or a mouse. The output apparatus may output various information to the outside, including determined distance information, direction information, and the like. The output apparatus may include, for example, a display, a speaker, a printer, a communication network, and a remote output device connected to the communication network.

The bus 1340 may be a communication bus of any type configured to implement an interconnection between the processor 1310, the memory 1320, and the communication interface 1330, for example, a system bus.

The foregoing parts may be separately disposed on chips that are independent of each other, or at least some or all of the parts may be disposed on a same chip. Whether the parts are separately disposed on different chips or integrated and disposed on one or more chips usually depends on a requirement of a product design. This embodiment of this application imposes no limitation on specific implementations of the foregoing parts.

The power-consuming device 1300 shown in FIG. 13 is merely an example. In an implementation process, the power-consuming device 1300 may further include other parts, which are not listed one by one in this specification.

An embodiment of this application may alternatively be a computer-readable storage medium. The computer-readable storage medium stores computer program instructions. When the computer program instructions are run by a processor, the processor is enabled to perform the steps of the method for controlling a surface temperature of a power-consuming device in embodiments of this application that are described above in this specification.

The computer-readable storage medium may be any combination of one or more readable media. The readable medium may be a readable signal medium or readable storage medium. For example, the readable storage medium may include but not limited to an electronic, magnetic, optical, electromagnetic, infrared, or semiconductor system, apparatus, or means, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage component, a magnetic storage component, or any suitable combination thereof.

An embodiment of this application further provides a chip system. The chip system includes a processor, the processor is coupled to a memory, and the processor executes a computer program stored in the memory, to implement the steps of any foregoing method for controlling a surface temperature of a power-consuming device in this application. The chip system may be a single chip or a chip module including a plurality of chips.

The foregoing describes in detail concepts, principles, and ideas of this application with reference to specific implementations (including embodiments and examples). A person skilled in the art should understand that implementations of this application are more than the foregoing several forms. After reading this application document, a person skilled in the art may make any possible improvement, replacement, or equivalent form to the steps, methods, apparatuses, and parts in the foregoing implementations, these improvements, replacements, and equivalent forms shall be considered to fall within the scope of this application. The protection scope of this application is subject to the claims.

**Claims**

1. A method for controlling a surface temperature of a power-consuming device, comprising:

obtaining a historical temperature that is of at least one heat emitting part located inside and/or outside the power-consuming device and that is between a first moment and a second moment; using the historical temperature as an input of a temperature prediction model, and outputting a predicted temperature that is of an external surface of the power-consuming device and that is at a third moment after the first moment and the second moment, wherein the temperature prediction model represents a relationship between the historical temperature and the predicted temperature; and
adjusting a working status of the power-consuming device based on the predicted temperature, to control the external surface temperature of the power-consuming device.

2. The method according to claim 1, wherein adjusting the working status of the power-consuming device based on the predicted temperature comprises:

determining an amount of heat emitted by each of the at least one heat emitting part based on a working status and a heat capacity model of each heat emitting part, wherein the heat capacity model represents a mapping relationship between the working status of the heat emitting part and the amount of heat emitted by the heat emitting part;
determining a resource restriction proportion of each heat emitting part based on the predicted temperature and the amount of heat emitted by each heat emitting part, wherein the resource restriction proportion indicates a reduction proportion of one or more of power consumption, a voltage, a frequency, and a load of the heat emitting part; and
controlling the working status of each heat emitting part based on the resource restriction proportion.

3. The method according to claim 2, wherein the at least one heat emitting part comprises a first heat emitting part, the first heat emitting part comprises a plurality of heat emitting sub-parts, and the method further comprises:

allocating a resource restriction proportion of the first heat emitting part to the plurality of heat emitting sub-parts with a goal of maximizing performance of the first heat emitting part, to determine a resource restriction proportion of each of the plurality of heat emitting sub-parts; and
controlling a working status of each heat emitting sub-part based on the resource restriction proportion of each heat emitting sub-part.

4. The method according to claim 3, wherein allocating the resource restriction of the first heat emitting part to the plurality of heat emitting sub-parts comprises: determining the resource restriction proportion of each heat emitting sub-part based on the resource restriction proportion of the first heat emitting part and a mapping table, wherein the mapping table records a plurality of resource restriction proportions corresponding to the first heat emitting part, and resource restriction proportions that are of the plurality of heat emitting sub-parts and that correspond to each of the plurality of resource restriction proportions.

5. The method according to claim 2, wherein determining the resource restriction proportion of each heat emitting part based on the predicted temperature and the amount of heat emitted by each heat emitting part comprises:

determining a resource restriction proportion of the power-consuming device based on the predicted temperature; and
allocating the resource restriction proportion of the power-consuming device to the plurality of heat emitting parts based on the amount of heat emitted by each heat emitting part, to obtain the resource restriction proportion of each heat emitting part.

6. The method according to any one of claims 1 to 5, wherein the working status comprises one or more of power consumption, a voltage, a frequency, and a load.

7. The method according to any one of claims 1 to 5, wherein the at least one heat emitting part comprises one or more of a system on chip, a modem, a housing of the power-consuming device, and a battery.

8. The method according to any one of claims 1 to 5, wherein the historical temperature of the at least one heat emitting part is directly measured by a temperature sensor; or the historical temperature of the at least one heat emitting part is calculated based on a temperature at another reference position, and the temperature at the another reference position comprises a temperature of another part or structure other than the at least one heat emitting part of the power-consuming device.

9. The method according to any one of claims 1 to 5, wherein the power-consuming device comprises a central processing unit, a graphics processing unit, and a double data rate memory, and the input further comprises one or more of load information of the central processing unit, load information of the graphics processing unit, and load information of the double data rate memory.

10. The method according to any one of claims 1 to 5, wherein the power-consuming device further comprises a cooling apparatus configured to cool a target component of the power-consuming device, and adjusting the working status of the power-consuming device based on the predicted temperature, to control the surface temperature of the power-consuming device comprises:

> determining a target cooling temperature of the target component based on the predicted temperature; and
> controlling a working status of the cooling apparatus based on the target cooling temperature, to cool the target component to the target cooling temperature.

11. An apparatus for controlling a surface temperature of a power-consuming device, comprising:

> an obtaining module, configured to obtain a historical temperature that is of at least one heat emitting part located inside and/or outside the power-consuming device and that is between a first moment and a second moment;
> a prediction module, configured to use the historical temperature as an input of a temperature prediction model, and output a predicted temperature of an external surface of the power-consuming device at a third moment after the first moment and the second moment, wherein the temperature prediction model represents a relationship between the historical temperature and the predicted temperature; and
> an adjustment module, configured to adjust a working status of the power-consuming device based on the predicted temperature, to control the external surface temperature of the power-consuming device.

12. The apparatus according to claim 11, wherein the adjustment module is further configured to:

> determine an amount of heat emitted by each of the at least one heat emitting part based on a working status and a heat capacity model of each heat emitting part, wherein the heat capacity model represents a mapping relationship between the working status of the heat emitting part and the amount of heat emitted by the heat emitting part;
> determine a resource restriction proportion of each heat emitting part based on the predicted temperature and the amount of heat emitted by each heat emitting part, wherein the resource restriction proportion indicates a reduction proportion of one or more of power consumption, a voltage, a frequency, and a load of the heat emitting part; and
control the working status of each heat emitting part based on the resource restriction proportion.

13. The apparatus according to claim 12, wherein the at least one heat emitting part comprises a first heat emitting part, the first heat emitting part comprises a plurality of heat emitting sub-parts, and the apparatus further comprises:

> an allocation module, configured to allocate a resource restriction proportion of the first heat emitting part to the plurality of heat emitting sub-parts with a goal of maximizing performance of the first heat emitting part, to determine a resource restriction proportion of each of the plurality of heat emitting sub-parts; and
> a control module, configured to control a working status of each heat emitting sub-part based on the resource restriction proportion of each heat emitting sub-part.

14. The apparatus according to claim 13, wherein the allocation module is further configured to:
determine the resource restriction proportion of each heat emitting sub-part based on the resource restriction proportion of the first heat emitting part and a mapping table, wherein the mapping table records a plurality of resource restriction proportions corresponding to the first heat emitting part, and resource restriction proportions that are of the plurality of heat emitting sub-parts and that correspond to each of the plurality of resource restriction proportions.

15. The apparatus according to claim 12, wherein the adjustment module is further configured to:

> determine a resource restriction proportion of the power-consuming device based on the predicted temperature; and
> allocate the resource restriction proportion of the power-consuming device to the plurality of heat emitting parts based on the amount of heat emitted by each heat emitting part, to obtain the resource restriction proportion of each heat emitting part.

16. The apparatus according to any one of claims 11 to 15, wherein the working status comprises one or more of power consumption, a voltage, a frequency, and a load.

17. The apparatus according to any one of claims 11 to 15, wherein the at least one heat emitting part comprises one or more of a system on chip, a modem, a housing of the power-consuming device, and a battery.

18. The apparatus according to any one of claims 11 to 15, wherein the historical temperature of the at least one heat emitting part is directly measured by using a temperature sensor; or the historical temperature of the at least one heat emitting part is calculated by using a temperature at another reference position, and the temperature at the another reference position comprises a temperature of another part or structure other than the at least one heat emitting part of the power-consuming device.

19. The apparatus according to any one of claims 11 to 15, wherein the power-consuming device comprises a central processing unit, a graphics processing unit, and a double data rate memory, and the input further comprises one or more of load information of the central processing unit, load information of the graphics processing unit, and load information of the double data rate memory.

20. The apparatus according to any one of claims 11 to 15, wherein the power-consuming device further comprises a cooling apparatus configured to cool a target component of the power-consuming device, and the adjustment module is further configured to:

    determine a target cooling temperature of the target component based on the predicted temperature; and
    control a working status of the cooling apparatus based on the target cooling temperature, to cool the target component to the target cooling temperature.

21. A power-consuming device, wherein the power-consuming device comprises a processor and a memory, and the processor is configured to execute a computer program stored in the memory, to implement the method for controlling a surface temperature of a power-consuming device according to any one of claims 1 to 10.

22. A computer-readable storage medium, wherein the computer-readable storage medium stores a computer program, and the computer program is configured to perform the method for controlling a surface temperature of a power-consuming device according to any one of claims 1 to 10.

23. A chip system, wherein the chip system comprises a processor, the processor is coupled to a memory, and the processor executes a computer program stored in the memory, to implement the steps of the method for controlling a surface temperature of a power-consuming device according to any one of claims 1 to 10.

Historical temperature

```
┌─────────────────────┐                    ┌──────────────────────────────┐
│  Power-consuming     │                    │ Temperature prediction model │
│      device          │                    └──────────────────────────────┘
│  ┌─────────────────┐ │                              │
│  │ Heat emitting   │ │                       Predicted
│  │     part        │ │                      temperature
│  └─────────────────┘ │                    ┌──────────────────────────────┐
└─────────────────────┘                    │        Control unit           │
                                            └──────────────────────────────┘
```

Adjust a working status

FIG. 1

S210

Obtain a historical temperature that is of at least one heat emitting part located inside and/or outside a power-consuming device and that is between a first moment and a second moment

S220

Use the historical temperature as an input of a temperature prediction model, and output a predicted temperature of an external surface of the power-consuming device at a third moment after the first moment and the second moment, where the temperature prediction model represents a relationship between the historical temperature and the predicted temperature

S230

Adjust a working status of the power-consuming device based on the predicted temperature, to control the external surface temperature of the power-consuming device

FIG. 2

Train:

Multi-scenario data and load data

Regression model

Housing temperature prediction model

FIG. 3

Predict:

| SOC Historical temperature | Rear housing Historical temperature |
| Modem Historical temperature | Battery Historical temperature |
| CPU load | GPU load |
| DDR load | Another component Historical temperature |

Model input

Housing temperature prediction model (linear regression, neural network, and the like)

Predict a temperature of the rear housing

FIG. 4

S510

Obtain a historical temperature that is of at least one heat emitting part located inside and/or outside a power-consuming device and that is between a first moment and a second moment

S520

Use the historical temperature as an input of a temperature prediction model, and output a predicted temperature of an external surface of the power-consuming device at a third moment after the first moment and the second moment, where the temperature prediction model represents a relationship between the historical temperature and the predicted temperature

S530

Determine an amount of heat emitted by each of the at least one heat emitting part based on a working status and a heat capacity model of each heat emitting part, where the heat capacity model represents a mapping relationship between the working status of the heat emitting part and the amount of heat emitted by the heat emitting part

S540

Determine a resource restriction proportion of each heat emitting part based on the predicted temperature and the amount of heat emitted by each heat emitting part, where the resource restriction proportion indicates a reduction proportion of one or more of power consumption, a voltage, a frequency, and a load of the heat emitting part

S550

Control the working status of each heat emitting part based on the resource restriction proportion, to control an external surface temperature of the power-consuming device

FIG. 5

FIG. 6

Mapping between a predicted housing temperature and a resource restriction proportion

FIG. 7

EP 4 769 055 A1

| Amount of heat emitted by a CPU |
| --- |
| Amount of heat emitted by a GPU |
| Amount of heat emitted by a DDR |

Total amount of emitted heat

CPU resources

GPU resources

DDR resources

0%

Resource proportion

FIG. 8

Temperature

Frequency

Performance

Frequency

| Temperature restriction proportion of a CPU | Cluster 0 | Cluster 1 | Cluster 2 |
|---|---|---|---|
| 0 | 0 | 0 | 0 |
| 5 | 5 | 5 | 0 |
| 10 | 10 | 10 | 10 |
| ... | ... | ... | ... |

Mapping table

FIG. 9

EP 4 769 055 A1

FIG. 10

Apparatus 1100 for controlling a surface temperature of a power-consuming device

Obtaining module 1110

Prediction module 1120

Adjustment module 1130

FIG. 11

**Power-consuming device 1200**

**Software: application program**

| Application 1 | Application 2 | ... |

**Software: operating system kernel**

**Power consumption management sub-system**

Heat management module

...

**Another sub-system**

...

...

**Hardware: power-consuming devices and components**

**SOC**

A CPU, a GPU, and a DDR

Temperature sensor

...

Another position Temperature sensor

FIG. 12

Power-consuming device 1300

Processor
1310

Communication
interface 1330

Bus 1340

Memory 1320

FIG. 13

## INTERNATIONAL SEARCH REPORT

| | International application No. |
|---|---|
| | **PCT/CN2024/119964** |

| **A.** | **CLASSIFICATION OF SUBJECT MATTER** |
|---|---|

G05D 23/20(2006.01)i

According to International Patent Classification (IPC) or to both national classification and IPC

| **B.** | **FIELDS SEARCHED** |
|---|---|

Minimum documentation searched (classification system followed by classification symbols)

IPC: G05D23, G01K

Documentation searched other than minimum documentation to the extent that such documents are included in the fields searched

Electronic data base consulted during the international search (name of data base and, where practicable, search terms used)

CNTXT, CNABS, ENTXTC, ENTXT, VEN: 温度, 控制, 历史, 预测, 模型, 表面, 表层, 外壳, temperature, control, historical, prediction, predicted, model, surface, shell

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| Y | CN 112416034 A (CHANGCHUN JETTY AUTOMOTIVE PARTS CO., LTD.) 26 February 2021 (2021-02-26)<br>description, paragraphs 45-122, and figures 1-11 | 1, 6-11, 16-23 |
| Y | CN 116126052 A (BEIJING YOUZHUJU NETWORK TECHNOLOGY CO., LTD.) 16 May 2023 (2023-05-16)<br>description, paragraphs 92-112, and figures 1-22 | 1, 6-11, 16-23 |
| A | CN 103488216 A (BEIJING INSTITUTE OF SPACECRAFT ENVIRONMENT ENGINEERING) 01 January 2014 (2014-01-01)<br>entire document | 1-23 |
| A | CN 112598151 A (SOUTH CHINA UNIVERSITY OF TECHNOLOGY) 02 April 2021 (2021-04-02)<br>entire document | 1-23 |
| A | CN 115655715 A (SANY RENEWABLE ENERGY CO., LTD.) 31 January 2023 (2023-01-31)<br>entire document | 1-23 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **06 January 2025** | **13 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/119964**

### C. DOCUMENTS CONSIDERED TO BE RELEVANT

| Category* | Citation of document, with indication, where appropriate, of the relevant passages | Relevant to claim No. |
|---|---|---|
| | JP 2000227242 A (OKI ELECTRIC INDUSTRY CO., LTD.) 15 August 2000 (2000-08-15) entire document | |
| PX | CN 117389344 A (HUAWEI TECHNOLOGIES CO., LTD.) 12 January 2024 (2024-01-12) description, paragraphs 60-160, and figures 1-13 | 1-23 |

Form PCT/ISA/210 (second sheet) (July 2022)

**INTERNATIONAL SEARCH REPORT**
Information on patent family members

| International application No. |
| --- |
| **PCT/CN2024/119964** |

| Patent document cited in search report | | | Publication date (day/month/year) | Patent family member(s) | Publication date (day/month/year) |
| --- | --- | --- | --- | --- | --- |
| CN | 112416034 | A | 26 February 2021 | None | |
| CN | 116126052 | A | 16 May 2023 | None | |
| CN | 103488216 | A | 01 January 2014 | None | |
| CN | 112598151 | A | 02 April 2021 | None | |
| CN | 115655715 | A | 31 January 2023 | None | |
| JP | 2000227242 | A | 15 August 2000 | None | |
| CN | 117389344 | A | 12 January 2024 | None | |

Form PCT/ISA/210 (patent family annex) (July 2022)

**EP 4 769 055 A1**

**Patent documents cited in the description**

- CN 202311250217